Europäisches Patentamt

European Patent Office

Office européen des brevets

(11) Veröffentlichungsnummer: **0 331 762 B1**

(12) **EUROPÄISCHE PATENTSCHRIFT**

(45) Veröffentlichungstag der Patentschrift: **08.01.92**

(21) Anmeldenummer: **88102949.0**

(22) Anmeldetag: **08.03.88**

(51) Int. Cl.⁵: **B60N 2/44, A47C 7/74,**
**B60H 1/00**

(54) **Sitz, insbesondere für Fahrzeuge, mit einer Anschlussplatte für eine aus der folienkaschierten Innenseite des Bezugsstoffes angebrachten und durch verschweisste oder verklebte weitere Folie abdichtend verbundene elektrische Widerstandsheizung.**

(43) Veröffentlichungstag der Anmeldung:
**13.09.89 Patentblatt 89/37**

(45) Bekanntmachung des Hinweises auf die
Patenterteilung:
**08.01.92 Patentblatt 92/02**

(84) Benannte Vertragsstaaten:
**BE DE ES FR GB IT NL SE**

(56) Entgegenhaltungen:
**DE-A- 3 505 652**
**DE-A- 3 513 909**

(73) Patentinhaber: **I.G. Bauerhin GmbH elektro-**
**technische Fabrik**

**W-6466 Gründau-Rothenbergen(DE)**

(72) Erfinder: **Altmann, Dieter**
**Herzbergstr. 23**
**W-6466 Gründau-Lieblos(DE)**
Erfinder: **Haupt, Eberhard**
**Im Rohr**
**W-6466 Gründau-Rothenbergen(DE)**
Erfinder: **Knüppel, Manfred**
**Alpenroderweg 19**
**W-5000 Köln 71(DE)**

(74) Vertreter: **Munderich, Paul, Dipl.-Ing.**
**Frankfurter Strasse 84**
**W-6466 Gründau-Rothenbergen(DE)**

## Beschreibung

Die Erfindung betrifft einen Sitz, insbesondere für Fahrzeuge, mit einer Anschlußplatte für eine auf der folienkaschierten Innenseite des Bezugsstoffes angebrachten und durch eine verschweißte oder verklebte weitere Folie abdichtend verbundene elektrische Widerstandsheizung, die der Sitz- bzw. Rückenlehnenfläche zugeordnet ist

Durch die Deutsche Patentanmeldung DE-A-35 05 652 vom 18. 02. 1985 wurde ein Verfahren zur Herstellung einer Sitzbeheizung bekannt, die für die Anordnung auf Schaumpolsterkernen sich aufgrund ihrer hohen Elastizität besonders eignet. Durch Anspruch 3 dieser Schrift wird die Verwendung dieser Heizung bei im Tiefziehverfahren hergestellten Sitz- und Rückenpolstern beansprucht.

Bei der Herstellung dieser beheizten Polsterteile macht der Anschluß zwischen der am Bezugsstoff angebrachten eigentlichen Heilung und der Zuleitung insofern Schwierigkeiten, weil der zugentlastete Übergang bei den meisten dieser Teile zusätzlich mit einem Thermoregler verbunden ist und sich aus diesem Grund ohne Berührung mit dem Bezugsstoff nur schwer positionieren läßt.

Die Zuleitung selbst läßt sich relativ leicht durch eine Aussparung am Formenrahmen führen. Der Anschluß legt sich dem Bezugsstoff auf und bildet dort nach dem Schaumvorgang eine harte Stelle, die zur Bruchbildung tendiert. Bleibt die Verbindung in dem freien Raum hängen, so verdreht sie sich meist und bildet dabei eine Heizleiter-Kreuzung und somit eine heiße Stelle, die nach Verzunderung ebenfalls in aller Regel zum Bruch führt.

Es ist deshalb Aufgabe dieser Erfindung, die den Regler tragende Anschlußplatte so zu positionieren, daß diese an der Oberfläche des Bezuges - dieser kann sowohl aus Polsterstoff, Leder oder Kustleder sein - nicht spürbar ist, sich nicht verdrehen und damit eine Heizleiter-Kreuzung bilden kann, so daß sich bei dem durch Stempel vorgenommenen Andrücken des Bezugsstoffes in die Vakuumform nur einwandfreie, lediglich nach innen gerichtete Konturen bilden, die den Andrückvorgang als solche nicht behindern und durch die sichere Plazierung der Anschlußplatte in vorgesehener Lage eine Kollision mit den Andrückwerkzeugen sicher vermeiden.

In diesem Zusammenhang muß weiter gewährleistet sein, daß diese, mit Heizung ausgerüsteten Bezüge, die in einem kontinuierlich oder semikontinuierlich laufenden, sogenannten Karussel, bei vorprogrammierten Taktzeiten ausgeschäumt werden, der Einlegevorgang der beheizten Bezüge in die einzelnen Tiefziehformen sich von der Einbringung der nichtbeheizten Bezüge praktisch nicht unterscheidet, d. h. zeitlich keinen oder einen so geringen Mehraufwand bedeuten, daß dieselben ohne Verzögerung des Fertigungsablaufes im Rahmen der Normalfertigung mitlauf en können.

Die erfindungsgemäße Lösung dieser Aufgabe sieht vor, daß die Anschlußplatte im Abstand von der Ebene der Heizleiter für die Anbindung des Anschlußkabels, die Aufnahme des Temperaturreglers und für die Fixierung der Anschlüsse für die Heizleiter auf der Innenseite des kunststoffkaschierten Bezugsstoffes oder der Abdeckfolie für die Heizleiter angeordnet ist und die Distanz zwischen der Innenseite des Bezugsstoffes bzw. der Abdeckfolie und der Anschlußplatte durch einen aus Schaumstoff oder anderen elastischen Stoffen gebildeten, mit beiden Ebenen verbundenen, an vorbestimmter Stelle angeordneten Aufbaublock eingestellt ist und daß der so vorbereitete Bezugsstoff mit seiner Sichtseite der Negativform des Sitz-oder Lehnenteiles anliegend eingebracht und das verbleibende Restvolumen mit Polsterschaumstoff verfüllt ist.

Durch diese Ausbildung wird gewährleistet, daß die Anschlußplatte im Abstand zwischen der Innenseite des Bezugsstoffes bzw. der Abdeckfolie der Heizleiter auf einem elastischen Aufbaublock angeordnet ist, wobei es zweckmäßig ist, daß der Aufbaublock das selbe elastische Verhalten wie der Polsterschaumstoff aufweist. Damit wird gewährleistet daß beim Ausschäumen der Form und bei der späteren Beanspruchung des Polsterteiles keine unterschiedlichen Beanspruchungen auftregen und immer ein ausreichender Restabstand zum Heizkörper gegeben ist.

Die unbelastete Höhe des elastischen Aufbaublockes liegt zwischen 15 und 30 mm. Um ein sattes Einschäumen des Aufbaublockes in den Polsterschaum ohne Stau und ohne "Lunkerung" zu erreichen, erhält dieser eine keilförmige oder runde Grundfläche.

Darüber hinaus ist vorgesehen, daß der elastische Aufbaublock auf der Seite des Anschlußkabels eine um 20 bis 50% größere Höhe hat, als die zum Polsterinnern gerichtete Seite. Damit wird die zugfreie Ausführung des Anschlußkabels erleichtert.

Unabhängig davon ist vorgesehen, daß die Anschlüsse für die Heizleiter auf der Innenseite des Bezugsstoffes auf der Seite des Anschlußkabels zur Anschlußplatte so geführt sind, daß bei Zug an dem Anschlußkabel die Anschlüsse für die Heizleiter entlastet bleiben. Die begrenzenden Seiten des Bezuges sollten durch eine Haut oder sonstige Maßnahmen abgeschlossen sein, damit beim Ausschäumvorgang nicht durch das Eindringen von Schäumerflüssigkeit später eine spürbare Verhärtung entsteht.

Darüber hinaus ist es vorteilhaft, wenn das elastische Verhalten des Aufbaublockes dem des Schaumstoffpolsters entspricht.

Abschließend wird nochmals betont, daß der Bezugsstoff textiler Natur oder aus Leder oder auch Kunstleder sein kann.

Die erfindungsgemäße Anordnung der Anschlußplatte auf der folienkaschierten Innenseite des Bezugsstoffes, sowie Ausschnitte der Ausbildung der Sitz-bzw. Lehnenteile werden durch die beigefügte Darstellung in beispielsweiser Ausführung näher erläutert.

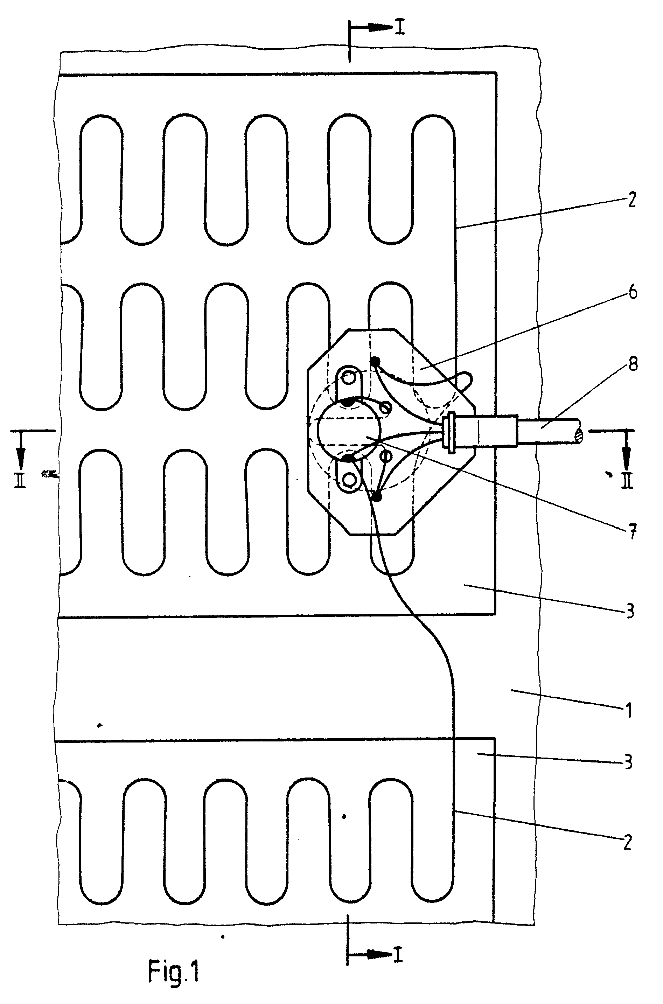

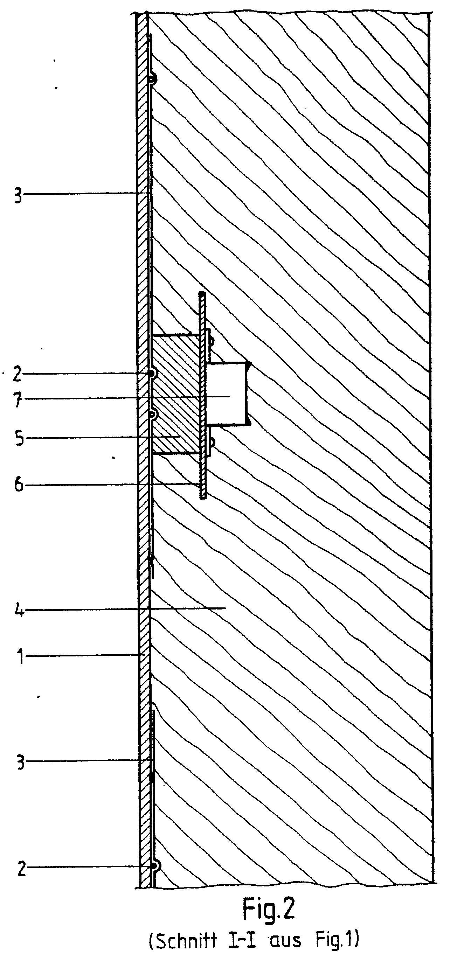

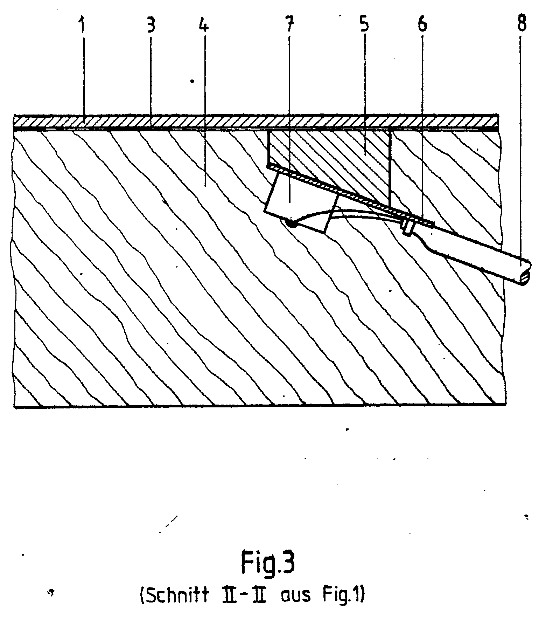

Figur 1 zeigt die Draufsicht auf die folienkaschierte Innenseite des Bezugsstoffes, die durch eine Abdeckfolie gesicherten Heizleiter der elektrischen Widerstandsheizung sowie die Anschlußplatte für die Anbindung des Anschlußkabels, wobei die Anschlußplatte gleichfalls Träger des Temperaturreglers ist.

Figur 2 zeigt den Schnitt I-I durch Figur 1 und verdeutlicht die Lage des elastischen Aufbaublockes.

Figur 3 zeigt den Schnitt II-II durch Figur 1 und verdeutlicht die abgeschrägte, d.h. keilförmige Ausbildung des Aufbaublockes für die Anschlußplatte.

Der Bezugsstoff 1 ist zum Polster 4 gerichtet, d.h. innenseitig folienkaschiert ausgebildet, und entsprechend der Sitz- bzw. Lehnenform mit einer elektrischen Widerstandsheizung aus mäanderförmig verlegten Heizleitern versehen, wobei diese insgesamt oder mit Überstand zu den Abmessungen der einzelnen Heizflächen durch eine Abdeckfolie 3 ergänzend in ihrer Lage gesichert und isoliert sind.

Auf dem kaschierten Bezugsstoff 1 oder auf der Abdeckfolie 3 ist, im Falle dieses Beispieles, ein zylindrischer, nach außerhalb der Sitz- oder Lehnenfläche keilförmig ansteigender, die Anschlußplatte 6 tragender elastischer Aufbaublock 5 befestigt.

Die unbelastete mittlere Höhe des aus elastischem Schaumstoff bestehenden Aufbaublockes 5 beträgt - ebenfalls im Falle dieses Beispieles - ca. 25 mm. Das elastische Verhalten des Aufbaublockes 5 entspricht dem des Polsters 4.

Auf der Anschlußplatte 6 ist die Begrenzungsmuffe des Anschlußkabels 8 fixiert, der Temperaturregler 7 befestigt und die Anschlüsse für die Verbindung mit den Heizleitern 2 ausgebildet.

Die Verbindungen mit den Heizleitern 2 und den Anschlüssen auf der Anschlußplatte 6 weisen eine solche Länge aus, daß auch bei Zugeinwirkung über das Anschlußkabel 8 die Anschlüsse für die Heizleiter 2 zugentlastet bleiben.

Die geneigte Ausbildung des Aufbaublockes 5 bzw. der mit ihm verbundenen Anschlußplatte 6 tragen zur Reduzierung der Auswirkungen des Kabelzuges bei.

## Patentansprüche

1. Sitz, insbesondere für Fahrzeuge, mit einer Anschlußplatte (6) für eine auf der folienkaschierten Innenseite eines Bezugsstoffes (1) angebrachten und durch eine verschweißte oder verklebte weitere Folie abdichtend verbundene elektrische Widerstandsheizung, die der Sitz- bzw. Rückenlehnenfläche zugeordnet ist, dadurch gekennzeichnet,

daß die Anschlußplatte (6) im Abstand von der Ebene der Heizleiter (2) für die Anbindung des Anschlußkabels (8), die Aufnahme des Temperaturreglers (7) und für die Fixierung der Anschlüsse für die Heizleiter (2) auf der Innenseite des kunststoffkaschierten Bezugsstoffes (1) oder der Abdeckfolie (3) für die Heizleiter (2) angeordnet ist und die Distanz zwischen der Innenseite des Bezugsstoffes (1) bzw. der Abdeckfolie (3) und der Anschlußplatte (6) durch einen aus Schaumstoff oder anderen elastischen Stoffen gebildeten, mit beiden Ebenen verbundenen, an vorbestimmter Stelle angeordneten Aufbaublock (5) eingestellt ist, und

daß der so vorbereitete Bezugsstoff (1) mit seiner Sichtseite der Negativform des Sitz-oder Lehnenteiles anliegend eingebracht und das verbleibende Restvolumen mit Polsterschaumstoff verfüllt ist.

2. Sitz mit einer Anschlußplatte nach Anspruch 1, dadurch gekennzeichnet,

daß die unbelastete Höhe des elastischen Aufbaublockes (5) zwischen 15 und 30 mm beträgt.

3. Sitz mit einer Anschlußplatte nach Anspruch 1, dadurch gekennzeichnet,

daß der elastische Aufbaublock (5) eine keilförmige oder runde Grundfläche hat.

4. Sitz mit einer Anschlußplatte nach einem der Ansprüche 1 bis 3, dadurch gekennzeichnet,

daß der elastische Aufbaublock (5) auf der Seite des Anschlußkabels (8) eine um 20 bis 50% größere Höhe hat, als die zum Polsterinneren gerichteten Seite.

5. Sitz mit einer Anschlußplatte nach Anspruch 1, dadurch gekennzeichnet,

**daß** die Anschlüsse für die Heizleiter (2) auf der Innenseite des Bezugsstoffes (1) auf der Seite des Anschlußkabels (8) zur Anschlußplatte (6) so geführt sind, daß bei Zug an dem Anschlußkabel (8) die Anschlüsse für die Heizleiter (2) entlastet bleiben.

6. Sitz mit einer Anschlußplatte nach Anspruch 1, dadurch gekennzeichnet,

**daß** das elastische Verhalten des Aufbaublokkes (5) dem des Schaumstoffpolsters (4) entspricht.

## Claims

1. A seat especially for vehicles, comprising a connection plate (6) for an electrical resistance heating element secured to the film-coated inner side of a covering fabric (1) and sealingly fixed by a welded or adhesive-bonded supplementary foil, with the said heating element being associated to the seat or back face, respectively, characterized in

   that the connection plate (6) is disposed in spaced relationship from the plane of the heat conductors (12) for attachment of the connecting cable (8), for accommodation of the temperature controller (7) and for fixing the connection for the heat conductors (2) to the inner side of the plastic-coated covering fabric (1) or the covering foil (3) for the heat conductors (2) ,and that the distance between the inner side of the covering fabric (1) or the covering foil (3) , respectively, and the connection plate (6) is adjusted by a mounting block (5) formed of foam material or other flexible substances and connected to both planes and located at a predetermined point, and

   that the so prepared covering fabric (1) with the display side thereof is placed in abutment with the negative form of the seat or back, with the remaining volume being filled with foamed stuffing material.

2. A seat having a connection plate according to claim 1, characterized in

   that the unloaded height of the elastic mounting block (5) is between 15 and 13 mm.

3. A seat having a connection plate according to claim 1, characterized in

   that the elastic mounting block (5) comprises a wedge-shaped or circular base area.

4. A seat having a connection plate according to any one of claims 1 to 3, characterized in

   that the elastic mounting block (5), on the side of the connection cable (8) is of a height larger by 20 to 50% than the side directed toward the interior of the cushion.

5. A seat having a connection plate according to claim 1, characterized in

   that the connections for the heat conductors (2) , on the inner side of the covering fabric (1), On the side of the connection cable (8) leading to the connection plate (6), are so guided that, when subjecting the connection cable (8) to tension, the connections for the heat conductors (2) remain relieved.

6. A seat having a connection plate according to claim 1, characterized in

   that the flexible behavior of the mounting block (5) corresponds o that of the foamed cushion (4).

## Revendications

1. Siège, en particulier pour véhicules automobiles, comprenant une plaque de jonction (6) destinée à un chauffage électrique à résistance de la surface du siège ou du dossier qui est placé sur le côté intérieur d'un revêtement (1) doublé d'une feuille et qui est relié de manière étanche par une autre feuille soudée ou collée, caractérisé en ce que la plaque de jonction (6) est disposée à distance du plan des conducteurs chauffants (2) pour l'attache du câble de connexion (8), le logement du régulateur de température (7) et pour la fixation des connexions aux conducteurs chauffants (2) sur le côté intérieur du revêtement (1) doublé de matière plastique ou de la feuille (3) de couverture des conducteurs chauffants (2) et la distance séparant le côté intérieur du revêtement (1) ou de la feuille de couverture (3) et la plaque de jonction (6) est déterminée par un bloc de montage (5) en matière alvéolaire ou en d'autres matières élastiques qui est relié aux deux plans, qui est disposé en un emplacement prédéterminé et en ce que le côté visible du revêtement (1) ainsi préparé est placé de manière qu'il soit couché dans le moule négatif de l'élément de siège ou de dossier et le volume restant qui subsiste est rempli de matière alvéolaire pour coussin.

2. Siège comprenant une plaque de jonction selon la revendication 1, caractérisé en ce que la hauteur du bloc élastique de montage (5) est comprise entre 15 et 30mm lorsqu'il n'est pas sous charge.

3. Siège comprenant une plaque de jonction selon la revendication 1, caractérisé en ce que le bloc élastique de montage (5) a une surface de base qui est cunéiforme ou circulaire.

4. Siège comprenant une plaque de jonction selon l'une des revendications 1 à 3, caractérisé en ce que le bloc élastique de montage (5) a, du côté du câble de connexion (8), une hauteur qui est de 20 à 50 % supérieure à celle du côté tourné vers l'intérieur du coussin.

5. Siège comprenant une plaque de jonction selon la revendication 1, caractérisé en ce que les connexions aux conducteurs chauffants (2) situés du côté intérieur du revêtement (1) sont posées sur le côté du câble de connexion (8) tourné vers la plaque de jonction (6) de manière qu'en cas de traction exercée sur le câble de connexion (8), les connexions aux conducteurs chauffants (2) demeurent soustraites aux efforts.

6. Siège comprenant une plaque de jonction selon la revendication 1, caractérisé en ce que l'élasticité du bloc de montage (5) correspond à celle du coussin (4) de matière alvéolaire.

Fig.1

**Fig.2**
(Schnitt I-I aus Fig.1)

**Fig.3**
(Schnitt II-II aus Fig.1)